# EUROPÄISCHE PATENTSCHRIFT

(11) **EP 2 570 786 B1**
(45) Veröffentlichungstag und Bekanntmachung des Hinweises auf die Patenterteilung: **27.04.2016**
(21) Anmeldenummer: 12005209.7
(22) Anmeldetag: 13.07.2012
(51) Int. Cl.: G01L 1/18, G01L 9/00

(54) **Kraftsensor**
Force sensor
Capteur de force

(30) Priorität: 13.09.2011 DE 102011112935
(43) Veröffentlichungstag der Anmeldung: 20.03.2013
(73) Patentinhaber: Micronas GmbH, 79108 Freiburg (DE); Albert-Ludwigs-Universität Freiburg, 79085 Freiburg (DE)
(72) Erfinder: Baumann, Marc, 79108 Freiburg (DE); Peter, Alexander, 77654 Offenburg (DE); Ruther, Patrick, 76199 Karlsruhe (DE); Paul, Oliver, 79280 Au (DE)
(74) Vertreter: Koch Müller Patentanwaltsgesellschaft mbH

(56) Entgegenhaltungen:
- DE-A1- 4 137 624
- JP-A- 2011 112 419
- US-A1- 2007 234 827

## Beschreibung

Die Erfindung betrifft einen Kraftsensor gemäß dem Oberbegriff des Patentanspruchs 1.

Aus der DE 41 37 624 ist ein Kraftsensor mit einem piezoresistiven Element bekannt. Hierbei wird unter anderem eine flügelartige Anordnung offenbart bei der eine Krafteinleitung in der Nähe des Widerlagers des Flügels vorgesehen ist. Des Weiteren ist eine integrierte Schaltung an dem äußeren Ende des Flügels angeordnet. Mittels der Krafteinleitung nahe an dem Widerlager wird versucht die integrierte Schaltung möglichst frei von mechanischem Stress zu halten.

Des Weiteren sind aus der JP 2011 112419 und der US 2007/234827 weitere Kraftsensoren bekannt.

Vor diesem Hintergrund besteht die Aufgabe der Erfindung darin, eine Vorrichtung anzugeben, die den Stand der Technik weiterbildet.

Die Aufgabe wird durch einen Kraftsensor mit den Merkmalen des Patentanspruchs 1 gelöst. Vorteilhafte Ausgestaltungen der Erfindung sind Gegenstand von Unteransprüchen.

Gemäß dem Gegenstand der Erfindung wird ein Kraftsensor offenbart, aufweisend, einen Träger mit einer Vorderseite und einer Rückseite und einem Halbleiterkörper mit einer Oberfläche und einer Rückfläche und einem an der Oberfläche des Halbleiterkörpers ausgebildeten piezoresistiven Element, wobei der Halbleiterkörper mit dem Träger kraftschlüssig verbunden ist, und einen ersten Flügel, ausgebildet an der Oberfläche des Halbleiterkörpers, mit einer Oberseite und einer Unterseite, wobei der Flügel im Wesentlichen entlang des Normalenvektors der Halbleiteroberfläche elastisch beweglich ist und der Flügel mit dem Halbleiterkörper kraftschlüssig verbunden ist und der Halbleiterkörper bei einer Bewegung des Flügels als Widerlager ausgebildet ist und auf dem Flügel ein erster Krafteinleitungsbereich ausgebildet ist, wobei ein zu dem ersten Flügel entgegengesetzt angeordneter zweiter Flügel mit einem zweiten Krafteinleitungsbereich ausgebildet ist und das piezoresistive Element zwischen dem ersten Flügel und dem zweiten Flügel angeordnet ist und ein mit dem ersten Krafteinleitungsbereich und dem zweiten Krafteinleitungsbereich kraftschlüssig verbundenes, brückenartig ausgebildetes Kraftverteilungsmittel vorgesehen ist, wobei das Kraftverteilungsmittel eine von der Oberfläche des Halbleiterkörpers abgewandte erste Fläche mit einem dritten Krafteinleitungsbereich aufweist. Es sei angemerkt, dass es vorteilhaft ist, den Krafteinleitungsbereich an dem äußeren Ende des ersten Flügels und des zweiten Flügels anzuordnen. Mit dem äußeren Ende wird hierbei dasjenige Ende des Flügels verstanden, welches entgegengesetzt zu dem Widerlager des jeweiligen Flügels angeordnet ist. Es sei angemerkt, dass bei einer Auslenkung der Flügel eine elektrische Spannung von dem piezoresistiven Element erzeugt wird.

Ein Vorteil der erfindungsgemäßen Vorrichtung ist es, dass sich für die Herstellung des Kraftsensors bekannte Prozessschritte aus der CMOS-Fertigung verwenden lassen. Der Kraftsensor lässt sich hierdurch in den Herstellprozess eines integrierten Schaltkreises ohne weiteres integrieren. Indem mittels des brückenartigen Kraftverteilungsmittels gleichzeitig auf zwei Flügel drückt und die beiden Flügel elastisch ausgelenkt werden und das piezoresistive Element zwischen den beiden Flügeln angeordnet ist, weist der Kraftsensor eine höhere Empfindlichkeit als die bisherigen einflügeligen Kraftsensoren auf. Des Weiteren erweitert sich der messbare Kraftbereich. Untersuchungen haben gezeigt, dass der Kraftsensor unempfindlich gegenüber Justagefehler des Kraftverteilungsmittels ist, insbesondere wirkt sich eine laterale Verschiebung des Kraftverteilungsmittels in Richtung der Längsachse der Flügel nur wenig auf die Empfindlichkeit des Kraftsensors aus. Des Weiteren lässt sich der dritte Krafteinleitungsbereich entlang der Längsachse des Kraftverteilungsmittels verschieben, wobei die Empfindlichkeit des Kraftsensors nur gering beeinflusst wird.

In einer Ausführungsform besteht wenigstens teilweise zwischen der Vorderseite des Trägers und der Rückfläche des Halbleiterkörpers eine stoffschlüssige Verbindung. Es ist bevorzugt, den Träger als Glaskörper oder Glasplatte auszuführen. Des Weiteren ist es bevorzugt, den Halbeiterkörper aus Silizium auszuführen.

In einer Weiterbildung ist der dritte Krafteinleitungsbereich mittig zwischen dem ersten Krafteinleitungsbereich und dem zweiten Krafteinleitungsbereich ausgebildet. Hierdurch lässt sich eine sehr symmetrische Verteilung der Kraft auf die beiden Flügel erreichen. In einer vorteilhaften Ausführungsform weist der Krafteinleitungsbereich eine Ausformung zur Aufnahme eines Krafteinleitungsmittels auf. Mit der Ausformung, die vorzugsweise als Kavität, höchst vorzugsweise als kegelstumpfartiges Loch ausgebildet ist, lässt sich die Lage des dritten Krafteinleitungsbereichs vorgeben. In einer bevorzugten Weiterbildung ist das Krafteinleitungsmittel kugelförmig ausgebildet und vorzugsweise aus Stahl gefertigt.

Des Weiteren ist es bevorzugt, dass die Biegefestigkeit des Kraftverteilungsmittels größer als die Biegefestigkeit des ersten Flügels und die Biegefestigkeit des zweiten Flügels ist. Hierdurch wird eine optimale Kraftübertragung auf die Flügel gewährleistet und die Empfindlichkeit des Kraftsensors erhöht. Vorzugsweise weist das Kraftverteilungsmittel einen balkenförmig ausgebildeten Bereich auf. Mit der balkenförmigen Ausformung wird die Steifigkeit auf einfache Weise erhöht. Vorzugsweise umfasst das Kraftverteilungsmittel Silizium.

Gemäß einer anderen Ausführungsform ist zwischen dem Kraftverteilungsmittel und dem ersten Krafteinleitungsbereich und dem zweiten Krafteinleitungsbereich jeweils ein Zwischenstück ausgebildet. Die Zwischenstücke lassen sich auch als Distanzstücke bezeichnen. Hiermit lässt sich der Abstand eines mittleren Bereichs des Kraftverteilungsmittels von dem piezoresistiven Element einstellen bzw. erhöhen. Bei einer Durchbiegung der Flügel in Folge einer Krafteinleitung lässt sich unter anderem mittels der Distanzstücke verhindern, dass der mittlere Bereich des Kraftverteilungsmittels auch bei einer größeren Durchbiegung der Flügel auf die Oberfläche des piezoresistiven Elements oder der Halbleiteroberfläche aufsetzt.

Gemäß einer bevorzugten Ausführungsform ist der zwischen dem ersten Flügel und dem zweiten Flügel liegende Teil des Halbleiterkörpers als eine freitragende plattenförmige Struktur ausgebildet und nimmt den piezoresistiven Sensor auf. Es ist bevorzugt, dass die plattenförmige Struktur an zwei zueinander gegenüberliegenden Seiten mit dem außerhalb der freitragenden Struktur angeordneten Halbleiterkörper verbunden ist und der erste Flügel und der zweite Flügel und die freitragende Struktur eine kreuzförmige Anordnung ausbilden. Zur Ausbildung der freitragenden Struktur lässt sich auf der Vorderseite des Trägers unterhalb der Flügel eine Kavität ausbilden.

In einer anderen Ausführungsform wird zwischen dem Träger und dem Halbleiterkörper ein Abstandstück eingefügt, sodass weder auf der Vorderseite des Trägers noch auf der Rückfläche des Halbleiterkörpers eine Strukturierung zur Ausbildung wenigstens einer Kavität erfolgt.

Gemäß einer alternativen Ausführungsform liegen der erste Flügel und der zweite Flügel auf dem Träger auf. Ein Vorteil ist, dass sich bei einem Aufliegen der Flügel auf dem Träger bevorzugt sehr große Kräfte messen lassen. Des Weiteren ist es bevorzugt, dass hierbei der erste Flügel und der zweite Flügel stoffschlüssig mit dem Träger verbunden sind. Des Weiteren liegt gemäß einer besonders bevorzugten Weiterbildung der das piezoresistive Element aufnehmende Teil des Halblelterkörpers auf dem Träger auf. Wird nun auf den Träger mittels der Flügel eine Kraft übertragen, wird der Träger konvex durch die Flügel verformt und in dem piezoresistiven Element wird eine Spannung induziert.

In einer anderen Weiterbildung sind der erste Flügel und der zweite Flügel und der Halbleiterkörper einstückig ausgebildet. Ein Vorteil ist, dass die sich eine derartige Struktur besonders einfach und kostengünstig mittels Standardprozessen der Halbleiterfertigung erzeugen lässt. Insbesondere sind zur Ausbildung der Gräben zwischen den Flügelkanten und dem Halbleiterkörper Trockenätzprozesse wie beispielsweise Deep-Trench-Ätzprozesse geeignet.

Gemäß einer bevorzugten Ausführungsform dient der Abstand von der Unterseite des ersten Flügels und von der Unterseite des zweiten Flügels zum Träger als Begrenzung der Auslenkung des jeweiligen Flügels. Der Abstand lässt sich entsprechend den elastischen Eigenschaften der Flügel und / oder des zu messenden Kraftbereichs einstellen. Hierdurch lässt sich die Zuverlässigkeit des Kraftsensors wesentlich verbessern. In einer alternativen Ausbildung ist an dem Kraftverteilungsmittel eine Ausformung angeordnet. Mittels der Ausformung oder anders ausgedrückt mittels eines Anschlags lässt sich die Auslenkung des ersten Flügels und des zweiten Flügels begrenzen. Ab einer vorgegebenen Kraft trifft die Ausformung an die Oberfläche des Halbleiterkörpers und verhindert eine weitere Auslenkung des ersten Flügels und des zweiten Flügels.

In einer Weiterbildung ist an der Oberfläche des Halbleiterkörpers abseits des ersten Flügels und abseits des zweiten Flügels eine integrierte Schaltung ausgebildet. Hierbei weist die integrierte Schaltung eine elektrische Wirkverbindung mit dem piezoresistive Element auf. Ein Vorteil ist, dass auf die integrierte Schaltung keine durch die externe Kraft verursachten mechanischen Spannungen einwirken und die integrierte Schaltung die von dem piezoresistiven Element erzeugte elektrische Spannung auswertet.

Die Erfindung wird nachfolgend unter Bezugnahme auf die Zeichnungen näher erläutert. Hierbei werden gleichartige Teile mit identischen Bezeichnungen beschriftet. Die dargestellte Ausführungsformen sind stark schematisiert, d.h. die Abstände und laterale und vertikale Erstreckung sind nicht maßstäblich und weisen, sofern nicht anders angegeben auch keine ableitbare geometrische Relation zueinander auf. Darin zeigen die:
- Figur 1: eine erste Ausführungsform eines Kraftsensors,
- Figur 2: eine Explosionsdarstellung des Kraftsensors der Figur 1,
- Figur 3: eine zweite Ausführungsform des Kraftsensors,
- Figur 4: eine Explosionsdarstellung des Kraftsensors der Figur 3,
- Figur 5: eine Kraftsensor zum Messen hoher Kräfte,
- Figur 6: eine Explosionsdarstellung des Kraftsensors der Figur 5,
- Figur 7: eine Querschnittsdarstellung in Längsrichtung eines Kraftsensors unter dem Einfluss einer Krafteinwirkung,
- Figur 8: eine Querschnittsdarstellung in Längsrichtung eines Kraftsensors unter dem Einfluss einer Krafteinwirkung mit einer ersten Ausführungsform eines integrierten Überlastschutzes,
- Figur 9: eine Querschnittsdarstellung in Längsrichtung eines Kraftsensors unter dem Einfluss einer Krafteinwirkung mit einer zweiten Ausführungsform eines integrierten Überlastschutzes.

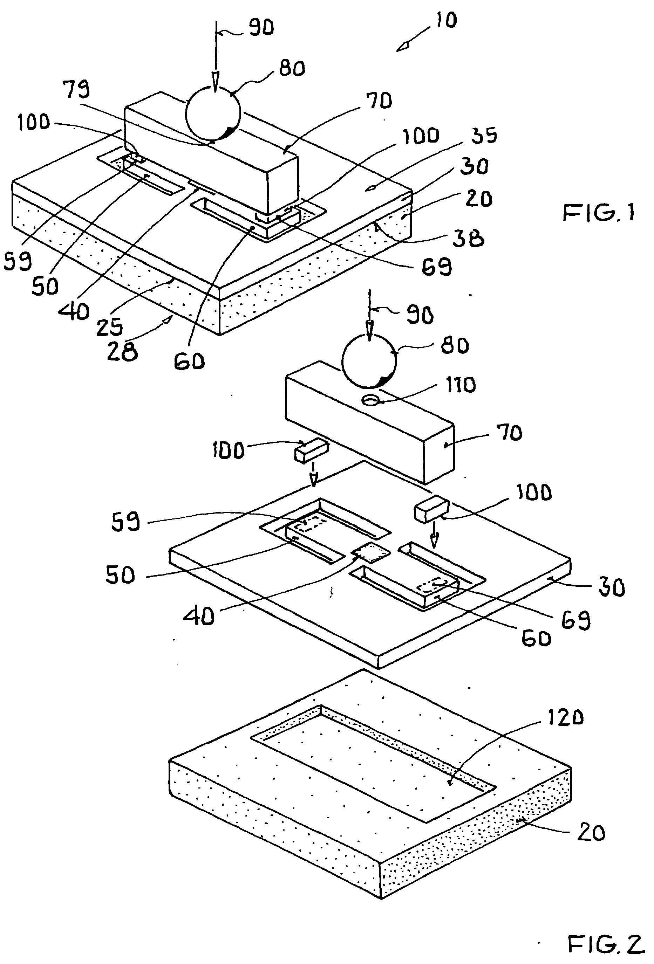

Die Abbildung der Figur 1 zeigt eine Ausführungsform eines erfindungsgemäßen Kraftsensors 10 mit einem Träger 20 mit einer Vorderseite 25 und einer Rückseite 28 und einem Halbleiterkörper 30 mit einer Oberfläche 35 und einer Rückfläche 38 und einem an der Oberfläche 35 des Halbleiterkörpers 30 ausgebildeten piezoresistiven Element 40, wobei der Halbleiterkörper 30 mit dem Träger 20 kraftschlüssig verbunden ist.

Ferner weist der Kraftsensor 10 einen ersten Flügel 50 auf, wobei der erste Flügel 50 an der Oberfläche 35 des Halbleiterkörpers 30 ausgebildet ist und eine Oberseite und einer Unterseite aufweist. Der erste Flügel 50 ist im Wesentlichen entlang des Normalenvektors der Oberfläche 35 des Halbleiterkörpers 30 elastisch beweglich, wobei der erste Flügel 50 mit dem Halbleiterkörper 30 kraftschlüssig verbunden ist und der Halbleiterkörper 30 bei einer Bewegung des Flügels als Widerlager ausgebildet ist. Auf dem ersten Flügel 50 ist ein erster Krafteinleitungsbereich 59 ausgebildet.

Des Weiteren weist der Kraftsensor 10 einen zu dem ersten Flügel 50 entgegengesetzt angeordneten zweiten Flügel 60 auf. An der Oberseite des zweiten Flügels 60 ist ein zweiter Krafteinleitungsbereich 69 ausgebildet. Der zweite Flügel 60 ist wie der erste Flügel 50 im Wesentlichen entlang des Normalenvektors der Oberfläche 35 des Halbleiterkörpers 30 elastisch beweglich, und der zweite Flügel 60 ist mit dem Halbleiterkörper 30 kraftschlüssig verbunden, so dass der Halbleiterkörper 30 bei einer Bewegung des zweiten Flügels 60 als Widerlager ausgebildet ist. Der erste Flügel 50 und der zweite Flügel 60 und der Halbleiterkörper 30 sind einstückig und vorzugsweise aus Silizium ausgebildet. Ferner weisen der erste Flügel 50 und der zweite Flügel 60 eine im wesentlich gleiche äußere Gestalt auf, wobei der erste Krafteinleltungsbereich 59 an dem äußeren Ende des ersten Flügels 50 angeordnet ist und der zweite Krafteinleitungsbereich 69 an dem äußeren Ende des zweiten Flügels 60 angeordnet ist.

Das piezoresistive Element 40 ist zwischen dem ersten Flügel 50 und dem zweiten Flügel 60 angeordnet. Ferner ist ein mit dem ersten Krafteinleitungsbereich 59 und dem zweiten Krafteinleitungsbereich 69 kraftschlüssig verbundenes brückenartig ausgebildetes Kraftverteilungsmittel 70 vorgesehen, wobei das Kraftverteilungsmittel 70 eine von der Oberfläche 35 des Halbleiterkörpers 30 abgewandte erste Fläche mit einem dritten Krafteinleitungsbereich 79 aufweist. Der dritte Krafteinleitungsbereich 79 ist vorzugsweise mittig zwischen dem ersten Krafteinleitungsbereich 59 und dem zweiten Krafteinleitungsbereich 69 ausgebildet.

Auf dem dritten Krafteinleitungsbereich 79 ist ein Krafteinleitungsmittel 80 angeordnet. Das Krafteinleitungsmittel 80 ist vorzugsweise kugelförmig ausgebildet und vorzugsweise aus Stahl gefertigt. Die Richtung der Kraft mit der der Kraftsensor bei einer Kraftmessung beaufschlagt wird, ist mit einem Pfeil 90 veranschaulicht. Zwischen dem vorzugsweise balkenförmig ausgebildeten Kraftverteilungsmittel 70, welches vorzugsweise aus Silizium besteht, und dem ersten Krafteinleitungsbereich 59 und dem zweiten Krafteinleitungsbereich 69 ist jeweils ein Zwischenstück 100 ausgebildet. Vorzugsweise besteht das Zwischenstück 100 aus Gold.

Es versteht sich, dass die Biegefestigkeit des Kraftverteilungsmittels 70 größer als die Biegefestigkeit des ersten Flügels 50 und die Biegefestigkeit des zweiten Flügels 60 ist. Je größer die Steifigkeit des Kraftverteilungsmittels 70 im Vergleich zu der Steifigkeit des ersten Flügels 50 bzw. des zweiten Flügels 60 ist, desto besser ist der Kraftübertrag auf die beiden Flügel und der Aufbau einer mechanischen Spannung innerhalb des piezoresistiven Elements 40.

In der Abbildung der Figur 2 wird eine Explosionsdarstellung des Kraftsensors 10 der Figur 1 gezeigt. Im Folgenden werden nur die Unterschiede zu der Darstellung in der Figur 1 erläutert. Auf der ersten Fläche des Kraftverteilungsmittels 70 ist der dritten Krafteinleitungsbereich 79 als eine erste Kavität 110 für die Aufnahme des Krafteinleitungsmittels 80 ausgebildet. Des Weiteren ist auf der Vorderseite 25 des Trägers 20 eine zweite Kavität 120 ausgebildet. Die lateralen Abmessungen der zweiten Kavität 120 sind so gewählt, dass der erste Flügel 50 und der zweite Flügel 60 und der Bereich des Halbleiterkörpers 30 zwischen dem ersten Flügel 50 und dem zweiten Flügel 60, der das piezoresistive Element 40 aufnimmt, eine freitragende plattenförmige Struktur ausbilden. Die plattenförmige Struktur ist an zwei zueinander gegenüberliegenden Seiten mit dem außerhalb der freitragenden Struktur angeordneten Halbleiterkörper 30 verbunden, sodass der erste Flügel 50 und der zweite Flügel 60 und die freitragende Struktur eine kreuzförmige Anordnung ausbilden. Der Halbleiterkörper 30 weist eine plattenförmige Ausbildung aus, d.h. die Dicke der beiden Flügel entspricht der Dicke des Halbleiterkörpers 30.

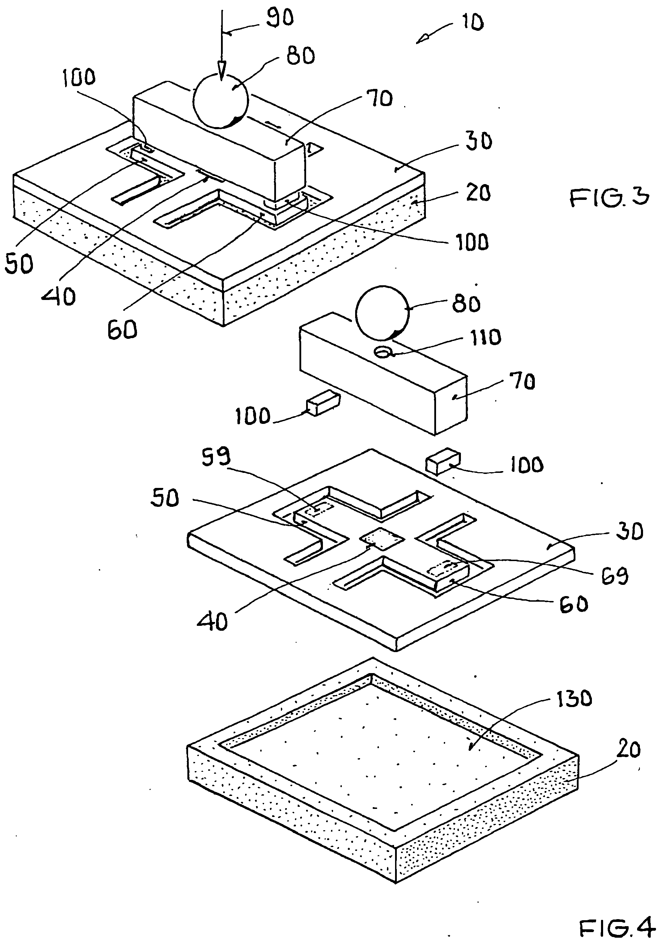

In der Abbildung der Figur 3 wird eine zweite Ausführungsform des Kraftsensors 10 dargestellt. Des Weiteren wird in der Figur 4 eine Explosionsdarstellung des Kraftsensors der Figur 3 gezeigt. Im Folgenden werden nur die Unterschiede der Figur 3 und der Figur 4 zu der Darstellung in den vorangegangenen Figuren erläutert. Auf der Vorderseite 25 des Trägers 20 eine dritte Kavität 130 ausgebildet. Die lateralen Abmessungen der dritten Kavität 130 sind so gewählt, dass der erste Flügel 50 und der zweite Flügel 60 und der gesamte geschlitzte Bereich des Halbleiterkörpers 30 zwischen dem ersten Flügel 50 und dem zweiten Flügel 60 freitragend sind. Die plattenförmige Struktur, welche besonders stark kreuzförmig ausgeprägt ist, ist an zwei zueinander gegenüberliegenden Seiten außerhalb der freitragenden Struktur mit dem Halbleiterkörper 30 verbunden.

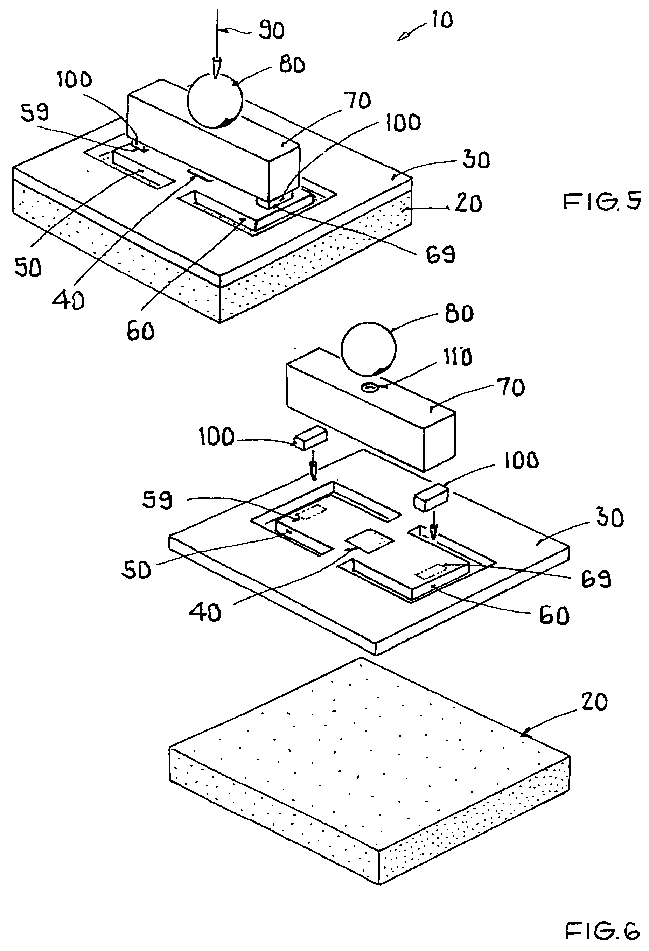

In der Abbildung der Figur 5 wird eine Ausführungsform des Kraftsensors 10 zum Messen großer Kräfte dargestellt. Des Weiteren wird in der Figur 6 eine Explosionsdarstellung des Kraftsensors der Figur 5 gezeigt. Im Folgenden werden nur die Unterschiede der Figur 5 und der Figur 6 zu der Darstellung in den vorangegangenen Figuren erläutert. Auf der Vorderseite 25 des Trägers 20 ist nunmehr keine Kavität ausgebildet. Hierdurch liegen der erste Flügel 50 und der zweite Flügel 60 und die gesamte Rückfläche 38 des Halbleiterkörpers 30 auf der Vorderseite 25 des Trägers 20 auf. Bei einer Krafteinleitung über den ersten Flügel 50 und den zweiten Flügel 60 wird unmittelbar der Träger 20 und der Halbleiterkörper 30 konvex verbogen. Ein derartiger Kraftsensor lässt sich besonders kostengünstig herstellen. Es versteht sich, dass der Träger 20 eine ausreichende Elastizität aufweist.

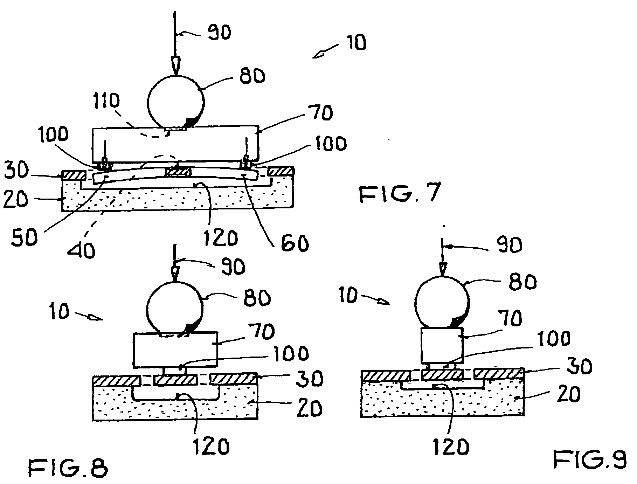

In der Abbildung der Figur 7 ist ein Querschnitt in Längsrichtung des Kraftsensors 10 der Ausführungsform der Figur 1 unter dem Einfluss einer Krafteinwirkung dargestellt. Es zeigt sich, dass mittels der symmetrischen Anordnung der Flügel beide Flügel ausgelenkt werden und eine große mechanische Spannung auf das piezoresistive Element aufbauen.

Die Abbildung der Figur 8 zeigt eine Draufsicht auf einen Schnitt quer zu der Längsrichtung des Kraftsensors 10. Im Folgenden werden nur die Unterschiede zu der Darstellung in den vorangegangenen Figuren erläutert. Hierbei ist die Breite des Kraftverteilungsmittels 70 größer als die Breite der beiden Flügel gewählt, so dass unter dem Einfluss einer Krafteinwirkung die Flügel in die Ausformung des Trägers 20 nur bis zu einer vorgegeben Tiefe eingedrückt werden, d.h. das Kraftverteilungsmittel 70 trifft auf die Oberfläche 35 des Halbleiterkörpers 30. Hiermit weist der Kraftsensor 10 einen integrierten Überlastschutz auf.

Die Abbildung der Figur 9 zeigt eine weitere Draufsicht auf einen Schnitt quer zu der Längsrichtung des Kraftsensors 10. Im Folgenden werden nur die Unterschiede zu der Darstellung in den vorangegangenen Figuren erläutert. Hierbei ist die Breite des Kraftverteilungsmittels 70 kleiner als die Breite der beiden Flügel gewählt. Jedoch ist die Tiefe der Ausformung, d.h. die Tiefe der zweiten Kavität 120 oder die Tiefe der dritten Kavität 130 in dem Träger 20 derart klein gewählt, dass unter dem Einfluss einer Krafteinwirkung die Flügel in die Ausformung des Trägers 20 nur bis zu der vorgegeben Tiefe eingedrückt werden. Anschließend treffen die Flügelenden auf den Träger 20. Hiermit lässt sich bei dem Kraftsensor 10 eine zweite Art von integrierten Überlastschutz ausbilden.

## Patentansprüche

1. Kraftsensor (10) mit,
- einem Träger (20) mit einer Vorderseite (25) und einer Rückseite (28),
- einem Halbleiterkörper (30) mit einer Oberfläche (35) und einer Rückfläche (38) und einem an der Oberfläche (35) des Halbleiterkörpers (30) ausgebildeten piezoresistiven Element (40), wobei der Halbleiterkörper (30) mit dem Träger (20) Kraftschlüssig verbunden ist,
- einem ersten Flügel (50) ausgebildet an der Oberfläche (35) des Halbleiterkörpers (30) mit einer Oberseite und einer Unterseite , wobei der erste Flügel (50) im Wesentlichen entlang des Normalenvektors der Oberfläche (35) des Halbleiterkörpers (30) elastisch beweglich ist, und der erste Flügel (50) mit dem Halbleiterkörper (30) kraftschlüssig verbunden ist und der Halbleiterkörper (30) bei einer Bewegung des ersten Flügels (50) als Widerlager ausgebildet ist, und auf dem ersten Flügel (50) ein erster Krafteinleitungsbereich (59) ausgebildet ist,
**dadurch gekennzeichnet, dass**
ein zu dem ersten Flügel (50) entgegengesetzt angeordneter zweiter Flügel (60) mit einem zweiten Krafteinleitungsbereich (69) ausgebildet ist, und
das piezoresistive Element (40) zwischen dem ersten Flügel (50) und dem zweiten Flügel (60) angeordnet ist, und
ein mit dem ersten Krafteinleitungsbereich (59) und dem zweiten Krafteinleitungsbereich (69) kraftschlüssig verbundenes brückenartig ausgebildetes Kraftvertellungsmittel (70) vorgesehen ist, wobei das Kraftverteilungsmittel (70) eine von der Oberfläche (35) des Halbleiterkörpers (30) abgewandte erste Fläche mit einem dritten Krafteinleitungsbereich (79) aufweist.

2. Kraftsensor (10) nach Anspruch 1, **dadurch gekennzeichnet, dass** der erste Flügel (50) und der zweite Flügel (60) eine im wesentlich gleiche äußere Gestalt aufweisen und der erste Krafteinleitungsbereich(59) an dem äußeren Ende des ersten Flügels (50) angeordnet ist und der zweite Krafteinleitungsbereich (69) an dem äußeren Ende des zweiten Flügels (60) angeordnet ist.

3. Kraftsensor (10) nach Anspruch 1 oder 2, **dadurch gekennzeichnet, dass** der dritte Krafteinleitungsbereich (79) mittig zwischen dem ersten Krafteinleitungsbereich (59) und dem zweiten Krafteinleitungsbereich (69) ausgebildet ist und der dritte Krafteinleitungsbereich (79) eine Ausformung zur Aufnahme eines Krafteinleitungsmittels (80) aufweist.

4. Kraftsensor (10) nach Anspruch 3, **dadurch gekennzeichnet, dass** das Krafteinleitungsmittel (80) kugelförmig ausgebildet ist und aus Stahl gefertigt ist.

5. Kraftsensor (10) nach einem der vorstehenden Ansprüche, **dadurch gekennzeichnet, dass** die Biegefestigkeit des Kraftverteilungsmittels (70) größer als die Biegefestigkeit des ersten Flügels (50) und die Biegefestigkeit des zweiten Flügels (60) ist.

6. Kraftsensor (10) nach einem der vorstehenden Ansprüche, **dadurch gekennzeichnet, dass** das Kraftverteilungsmittel (70) einen balkenförmig ausgebildeten Bereich aufweist.

7. Kraftsensor (10) nach einem der vorstehenden Ansprüche, **dadurch gekennzeichnet, dass** zwischen dem Kraftverteilungsmittel (70) und dem ersten Krafteinleitungsbereich (59) und dem zweiten Krafteinleitungsbereich (69) jeweils ein Zwischenstück (100) ausgebildet ist.

8. Kraftsensor (10) nach einem der vorstehenden Ansprüche, **dadurch gekennzeichnet, dass** der zwischen dem ersten Flügel (50) und dem zweiten Flügel (60) liegende Teil des Halbleiterkörpers ((30) als eine freitragende plattenförmige Struktur ausgebildet Ist und das piezoresistive Element (40) aufnimmt.

9. Kraftsensor (10) nach Anspruch 8, **dadurch gekennzeichnet, dass** die plattenförmige Struktur an zwei zueinander gegenüberliegenden Seiten mit dem außerhalb der freitragenden Struktur angeordneten Halbleiterkörper (30) verbunden ist und der erste Flügel (50) und der zweite Flügel (60) und die freitragende Struktur eine kreuzförmige Anordnung ausbilden.

10. Kraftsensor (10) nach Anspruch 8, **dadurch gekennzeichnet, dass** der erste Flügel (50) und der zweite Flügel (60) auf dem Träger (20) aufliegen.

11. Kraftsensor (10) nach einem der vorstehenden Ansprüche, **dadurch gekennzeichnet, dass** erste Flügel (50) und der zweite Flügel (60) und der Halbleiterkörper (30) einstückig ausgebildet sind.

12. Kraftsensor (10) nach einem der vorstehenden Ansprüche, **dadurch gekennzeichnet, dass** der Abstand von der Unterseite des ersten Flügels (50) und von der Unterseite des zweiten Flügels (60) zum Träger (20) als Begrenzung der Auslenkung des jeweiligen Flügels (50, 60) dient.

13. Kraftsensor (10) nach einem der Ansprüche 1 bis 11, **dadurch gekennzeichnet, dass** an dem Kraftvertellungsmittel (70) eine Ausformung angeordnet ist und mittels der Ausformung die Auslenkung des ersten Flügels (50) begrenzt wird.

14. Kraftsensor (10) nach einem der vorstehenden Ansprüche, **dadurch gekennzeichnet, dass** das Kraftverteilungsmittel (70) Silizium umfasst.

15. Kraftsensor (10) nach einem der vorstehenden Ansprüche, **dadurch gekennzeichnet, dass** an der Oberfläche (35) des Halbleiterkörpers (30) abseits des ersten Flügel (50) und abseits des zweiten Flügels (60) eine integrierte Schaltung ausgebildet ist und die integrierte Schaltung eine elektrische Wirkverbindung mit dem piezoresistiven Element (40) aufweist.

## Claims

1. Force sensor (10) comprising
- a support (20) with a front side (25) and a back side (28),
- a semiconductor body (30) with an top surface (35) and a back surface (38) and a piezoresistive element (40) formed at the top surface (35) of the semiconductor body (30), wherein the semiconductor body (30) is non-positively connected with the support (20), and
- a first blade (50), which is formed at the top surface (35) of the semiconductor body (30), with an upper side and a lower side,
wherein the first blade (50) is resiliently movable substantially along the normal vector of the top surface (35) of the semiconductor body (30), the first blade (50) is non-positively connected with the semiconductor body (30), the semiconductor body (30) is formed as a counter-bearing in the case of movement of the first blade (50), and a first force introduction region (59) is formed on the first blade (50),
**characterised in that**
a second blade (60) arranged opposite the first blade (50) is formed with a second force introduction region (69),
the piezoresistive element (40) is arranged between the first blade (50) and the second blade (60), and
a force distribution means (70) of bridge-like construction and non-positively connected with the first force introduction region (59) and the second force introduction region (69) is provided, wherein the force distribution means (70) has a first surface, which is remote from the top surface (35) of the semiconductor body (30), with a third force introduction region (79).

2. Force sensor (10) according to claim 1, **characterised in that** the first blade (50) and the second blade (60) have a substantially identical external shape and the first force introduction region (59) is arranged at the outer end of the first blade (50) and the second force introduction region (69) is arranged at the outer end of the second blade (60).

3. Force sensor (10) according to claim 1 or 2, **characterised in that** the third force introduction region (79) is formed centrally between the first force introduction region (59) and the second force introduction region (69) and the third force introduction region (79) has a shaped portion for mounting a force introduction means (80).

4. Force sensor (10) according to claim 3, **characterised in that** the force introduction means (80) is of spherical form and made of steel.

5. Force sensor (10) according to any one of the preceding claims, **characterised in that** the bending resistance of the force distribution means (70) is greater than the bending resistance of the first blade (50) and the bending resistance of the second blade (60).

6. Force sensor (10) according to any one of the preceding claims, **characterised in that** the force distribution means (70) has a region of bar-shaped construction.

7. Force sensor (10) according to any one of the preceding claims, **characterised in that** a respective intermediate member (100) is formed between the force distribution means (70) and each of the first force introduction region (59) and second force introduction region (69).

8. Force sensor (10) according to any one of the preceding claims, **characterised in that** the part of the semiconductor body (30) lying between the first blade (50) and the second blade (60) is constructed as a self-supporting plate-shaped structure and mounts the piezoresistive element (40).

9. Force sensor (10) according to claim 8, **characterised in that** the plate-shaped structure is connected at two mutually opposite sides with the semiconductor body (30) arranged outside the self-supporting structure and the first blade (50), the second blade (60) and the self-supporting structure form a cruciform arrangement.

10. Force sensor (10) according to claim 8, **characterised in that** the first blade (50) and the second blade (60) rest on the support (20).

11. Force sensor (10) according to any one of the preceding claims, **characterised in that** the first blade (50), the second blade (60) and the semiconductor body (30) are of integral construction.

12. Force sensor (10) according to any one of the preceding claims, **characterised in that** the distance from the underside of the first blade (50) and the underside of the second blade (60) to the support (20) serves as a limitation of the deflection of the respective blade (50, 60).

13. Force sensor (10) according to any one of claims 1 to 11, **characterised in that** a shaped portion is arranged at the force distribution means (70) and the deflection of the first blade (50) is limited by means of the shaped portion.

14. Force sensor (10) according to any one of the preceding claims, **characterised in that** the force distribution means (70) comprises silicon.

15. Force sensor (10) according to any one of the preceding claims, **characterised in that** an integrated circuit is formed at the top surface (35) of the semiconductor body (30) to one side of the first blade (50) and to one side of the second blade (60) and the integrated circuit has an electrically operative connection with the piezoresistive element (40).

## Revendications

1. Capteur de force (10) avec
- un support (20) avec un côté antérieur (25) et un côté postérieur (28),
- un corps semi-conducteur (30) avec une face supérieure (35) et une face arrière (38) et un élément piézo-résistif (40) formé sur la face supérieure (35) du corps semi-conducteur (30), dans lequel le corps semi-conducteur (30) est assemblé par adhérence au support (20),
- une première aile (50) formée sur la face supérieure (35) du corps semi-conducteur (30) avec un côté supérieur et un côté inférieur,
dans lequel la première aile (50) est élastiquement mobile essentiellement le long du vecteur normal à la face supérieure (35) du corps semi-conducteur (30), et la première aile (50) est assemblée par adhérence au corps semi-conducteur (30) et le corps semi-conducteur (30) est configuré sous forme de butée lors d'un mouvement de la première aile (50) et une première zone d'introduction de force (59) est formée sur la première aile (50),
**caractérisé en ce que**
une deuxième aile (60) disposée à l'opposé de la première aile (50) est configurée avec une deuxième zone d'introduction de force (69) et
l'élément piézo-résistif (40) est agencé entre la première aile (50) et la deuxième aile (60) et
il est prévu un moyen de répartition de force (70) réalisé en forme de pont assemblé par adhérence à la première zone d'introduction de force (59) et à la deuxième zone d'introduction de force (69), dans lequel le moyen de répartition de force (70) présente une première face avec une troisième zone d'introduction de force (79), située à l'opposé de la face supérieure (35) du corps semi-conducteur (30).

2. Capteur de force (10) selon la revendication 1, **caractérisé en ce que** la première aile (50) et la deuxième aile (60) présentent une forme extérieure essentiellement identique et la première zone d'introduction de force (59) est disposée à l'extrémité extérieure de la première aile (50) et la deuxième zone d'introduction de force (69) est disposée à l'extrémité extérieure de la deuxième aile (60).

3. Capteur de force (10) selon la revendication 1 ou 2, **caractérisé en ce que** la troisième zone d'introduction de force (79) est formée au milieu entre la première zone d'introduction de force (59) et la deuxième zone d'introduction de force (69) et la troisième zone d'introduction de force (79) présente un creux destiné à recevoir un moyen d'introduction de force (80).

4. Capteur de force (10) selon la revendication 3, **caractérisé en ce que** le moyen d'introduction de force (80) est réalisé en forme de bille et est fabriqué en acier.

5. Capteur de force (10) selon l'une quelconque des revendications précédentes, **caractérisé en ce que** la rigidité de flexion du moyen de répartition de force (70) est plus grande que la rigidité de flexion de la première aile (50) et la rigidité de flexion de la deuxième aile (60).

6. Capteur de force (10) selon l'une quelconque des revendications précédentes, **caractérisé en ce que** le moyen de répartition de force (70) présente une zone réalisée en forme de poutre.

7. Capteur de force (10) selon l'une quelconque des revendications précédentes, **caractérisé en ce qu'**une pièce intermédiaire (100) est formée respectivement entre le moyen de répartition de force (70) et la première zone d'introduction de force (59) et entre le moyen de répartition de force (70) et la deuxième zone d'introduction de force (69).

8. Capteur de force (10) selon l'une quelconque des revendications précédentes, **caractérisé en ce que** la partie du corps semi-conducteur (30) située entre la première aile (50) et la deuxième aile (60) est réalisée sous la forme d'une structure en forme de plaque autoportante et comporte l'élément piézo-résistif (40).

9. Capteur de force (10) selon la revendication 8, **caractérisé en ce que** la structure en forme de plaque est assemblée sur deux côtés opposés l'un à l'autre au corps semi-conducteur (30) disposé à l'extérieur de la structure autoportante et la première aile (50) et la deuxième aile (60) et la structure autoportante forment un agencement en forme de croix.

10. Capteur de force (10) selon la revendication 8, **caractérisé en ce que** la première aile (50) et la deuxième aile (60) reposent sur le support (20).

11. Capteur de force (10) selon l'une quelconque des revendications précédentes, **caractérisé en ce que** la première aile (50) et la deuxième aile (60) et le corps semi-conducteur (30) sont réalisés d'une seule pièce.

12. Capteur de force (10) selon l'une quelconque des revendications précédentes, **caractérisé en ce que** la distance du côté inférieur de la première aile (50) et du côté inférieur de la deuxième aile (60) au support (20) fait office de limitation de l'extension de l'aile respective (50, 60).

13. Capteur de force (10) selon l'une quelconque des revendications 1 à 11, **caractérisé en ce qu'**un creux est disposé sur le moyen de répartition de force (70) et l'extension de la première aile (50) est limitée au moyen du creux.

14. Capteur de force (10) selon l'une quelconque des revendications précédentes, **caractérisé en ce que** le moyen de répartition de force (70) comprend du silicium.

15. Capteur de force (10) selon l'une quelconque des revendications précédentes, **caractérisé en ce qu'**un circuit intégré est formé sur la face supérieure (35) du corps semi-conducteur (30) à l'écart de la première aile (50) et à l'écart de la deuxième aile (60) et le circuit intégré présente une liaison électrique active avec l'élément piézo-résistif (40).
